# EUROPÄISCHE PATENTSCHRIFT

(11) **EP 3 365 216 B1**
(45) Veröffentlichungstag und Bekanntmachung des Hinweises auf die Patenterteilung: **09.10.2019**
(21) Anmeldenummer: 15787527.9
(22) Anmeldetag: 23.10.2015
(51) Int. Cl.: B61D 23/02, B60R 3/02

(54) **PNEUMATISCHE TRITTPLATTENREINIGUNG**
PNEUMATIC FOOTPLATE CLEANING
NETTOYAGE DE MARCHEPIED PNEUMATIQUE

(43) Veröffentlichungstag der Anmeldung: 29.08.2018
(73) Patentinhaber: Gebr. Bode GmbH & Co. KG, 34123 Kassel (DE)
(72) Erfinder: WALTER, Hans Joachim, 34128 Kassel (DE); PAUL, Oliver, 38304 Wolfenbüttel (DE)
(74) Vertreter: Patentanwälte Bauer Vorberg Kayser
(86) Internationale Anmeldenummer: PCT/EP2015/074652
(87) Internationale Veröffentlichungsnummer: WO 2017/067612

(56) Entgegenhaltungen:
- EP-A1- 2 022 671
- CN-U- 202 138 388
- DE-A1- 19 937 487
- DE-U1- 8 815 693
- DE-U1-202008 005 490

## Beschreibung

Die vorliegende Erfindung betrifft ein Fahrzeugtrittsystem mit einer Reinigungsvorrichtung sowie ein Verfahren zur Reinigung einer Trittplatte eines Fahrzeugtrittsystems.

Aus dem Stand der Technik ist bekannt, dass bei Fahrzeugen, insbesondere bei Fahrzeugen zur Personenbeförderung, wie Schienenfahrzeuge und Busse, Trittsysteme eingesetzt werden, welche in der Regel im Bereich des offenen Spaltes von einer Trittplatte zu einer fahrzeugseitigen Schiene mit einer Bürste ausgestattet sind. Die Bürste dient zur Reinigung der Trittplatte und zum Schutz davor, dass Schmutz ins Fahrzeuginnere gelangt. Eine Trittschiene befindet sich dabei fahrzeugseitig an einem Portal der Trittplatte zum Fahrzeug, beispielsweise an einem Türportal. Dieses Türportal wird mit einer Bürste abgedichtet, welche jedoch zuweilen eine unzureichende Abdichtung gegen Verschmutzungen oder das Eindringen von Umwelteinflüssen bereitstellt. Beim Einfahren der Trittplatte, werden Verschmutzungen, wie beispielsweise Splitt, Steinchen oder Eis und Schnee nur geringfügig und unzureichend durch die Bürste von der Trittplatte entfernt und bauen sich meist noch vor der Bürste und der fahrzeugseitigen Trittschiene auf. Wenn auf eine Bürste verzichtet wird, dann werden Verschmutzungen beim Einfahren der Trittplatte durch das Türportal mit in das Fahrzeuginnere transportiert und müssen bei Wartungsarbeiten entfernt werden. Zuweilen kommt es auch vor, dass Verschmutzungen wie Streugranulat, Splitt Salz oder Eis und Schnee zu Verklemmungen beim Einfahren der Trittplatte in das Türportal führt, was wiederum zu Funktionsstörungen und Ausfall eines ganzen Türsystems führen kann.

Das Dokument EP 2 022 671 A1 beschreibt beispielsweise ein Fahrzeugtrittsystem aufweisend eine Trittplatte mit einer begehbaren Trittplattenoberseite und eine Reinigungsvorrichtung zum Reinigen derselben. Eine Reinigungsvorrichtung weist wenigstens einen Luftkanal auf, der die Trittplattenoberseite mit Druckluft beaufschlagt. Die Trittplatte ist dabei ortsfest am Fahrzeug angeordnet und wird über ebenfalls ortsfeste Düsen gereinigt. Insofern ist der Reinigungseffekt lediglich in dem Bereich zuverlässig gut, in dem der Luftstrom auf die Trittplattenoberseite auftrifft.

Aufgabe der vorliegenden Erfindung ist es daher, eine verbesserte Variante eines Trittsystems für Fahrzeuge bereitzustellen, mit der es möglich ist, eine Trittplatte von Verschmutzungen und Fremdpartikeln zu reinigen.

Diese Aufgabe wird mit einem Fahrzeugtrittsystem mit den Merkmalen des Anspruchs 1 und einem Verfahren mit den Merkmalen des Anspruchs 13 gelöst. Vorteilhafte weitere Ausgestaltungen sind jeweils in den Unteransprüchen angegeben. Dabei können alle Kombinationen wie auch nur einzelne Kombinationen zwischen dem Fahrzeugtrittsystem und dem Verfahren zur Reinigung einer Trittplatte eines Fahrzeugtrittsystems genutzt werden. Weiterhin ist es jeweils auch vorgesehen und möglich, einzelne oder mehrere Merkmale des Fahrzeugtrittsystems und des Verfahrens zur Reinigung einer Trittplatte eines Fahrzeugtrittsystems beliebig zu kombinieren.

Erfindungsgemäß wird ein Fahrzeugtrittsystem vorgeschlagen, welches eine Trittplatte mit einer begehbaren Trittplattenoberseite aufweist. Zusätzlich weist das Fahrzeugtrittsystem eine Reinigungsvorrichtung auf, mit der die Trittplattenoberseite von Verschmutzungen gereinigt werden kann. Die Reinigung erfolgt dabei mittels Druckluft, wobei ein Luftkanal mit Druckluft beaufschlagt wird und an einer Öffnung des Luftkanals austritt, sodass die Druckluft in Richtung der Trittplattenoberseite strömt.

In einer bevorzugten Ausgestaltungsform ist die Öffnung des Luftkanals oberhalb der Trittplattenoberseite angeordnet. Weiterhin ist erfindungsgemäß vorgesehen, dass der Luftkanal und/oder die Öffnung fahrzeugseitig angeordnet sind.

Fahrzeugseitig in diesem Zusammenhang bedeutet entweder, dass der Luftkanal und die Öffnung direkt am Fahrzeug angeordnet sind oder dass der Luftkanal an einem Türportal angeordnet ist. Mit Türportal in diesem Zusammenhang sind fahrzeugseitige Bauteile im Einstiegsbereich des Fahrzeugs gemeint, beispielsweise eine Trittschiene, die mit dem Fahrzeugtrittsystem direkt oder indirekt zusammenwirken und am Fahrzeug montiert ist.

Die Trittplatte kann ein- und ausgefahren werden.

Es ist vorgesehen, dass die Öffnungen des Luftkanals oder aber auch der Luftkanal in einer der Trittplattenoberseite zugewandten Innenseite des Fahrzeugs oder einem anderen Bauteil fahrzeugseitig angeordnet sind.

Es ist vorgesehen, dass die Trittplattenoberseite mit der Reinigungsvorrichtung derart gereinigt wird, dass unter Druckluftbeaufschlagung des Luftkanals ein Druckluftstrom aus der Öffnung des Luftkanals austritt und auf die Trittplattenoberseite auftrifft. Dabei ist bevorzugt, dass der Luftstrom unmittelbar vor der Öffnung auf die Trittplattenoberseite auftrifft und dadurch eine Verschmutzung eine Krafteinwirkung erfährt, die die Verschmutzung verschiebt.

Daher ist bevorzugt, dass ein austretender Luftstrom die gesamte Breite der Trittplatte trifft. Als Breite der Trittplatte ist in diesem Zusammenhang die Breite der fahrzeugzugewandten Seite der Trittplatte zu verstehen.

In einer ersten Variante trifft der Druckluftstrom auf die gesamte Fläche der Trittplatte auf. Dabei wird durch den austretenden Druckluftstrom die gesamte Fläche einer feststehenden Trittplatte so getroffen, dass diese mit dem Druckluftstrom von Verschmutzungen gereinigt wird. Insbesondere kommt diese Variante bei feststehenden Trittplatten zum Einsatz. Diese werden beispielsweise bei Fahrzeugen eingesetzt, bei denen eine feststehende Einstiegshilfe oder ein Tritt für Personen vorgesehen ist. Der Druckluftstrom muss dabei so ausgestaltet und ausgerichtet sein, dass er die gesamte Fläche so trifft, dass Verschmutzungen weggeschoben werden.

In einer zweiten Variante bedeckt der austretende Druckluftstrom nur eine Teilfläche der gesamten Fläche der Trittplatte. Zur Reinigung der gesamten Oberseite der Trittplatte ist dann jedoch erforderlich, dass der Luftstrom und die Trittplattenoberseite eine Relativbewegung ausführen, sodass auch hier die gesamte Oberfläche von Verschmutzungen gereinigt werden kann. Aus dem Stand der Technik sind beispielsweise Schiebetritte, Klapptritte und Schiebehubtritte bekannt, bei denen eine Trittplatte ausfährt, wenn Personen in ein Fahrzeug einsteigen oder dieses verlassen, und wieder einfährt. Daher ist es in der zweiten Variante bevorzugt, die Führung des Druckluftstroms auf die Trittplattenoberseite mit einer Ein- und Ausfahrbewegung der Trittplatte zu kombinieren. In der zweiten Variante ist daher vorgesehen, dass die Trittplattenoberseite über die gesamte Breite mit einem Druckluftstrom beaufschlagt wird, welcher beim Einfahren der Trittplatte in das Fahrzeug, über die Trittplattenoberseite geführt wird, sodass die Trittplatte von Verschmutzungen gereinigt wird. Der Druckluftstrom trifft dabei auf die Trittplattenoberseite und befreit diese von Verunreinigungen.

In einer bevorzugten Ausgestaltungsform ist dabei die Reinigungsvorrichtung fahrzeugseitig oberhalb der Trittplatte angebracht. Weiterhin kann die Reinigungsvorrichtung auch in ein fahrzeugseitiges Bauteil integriert sein, wie beispielsweise eine Trittschiene, eine Blende oder eine Tür.

In einer weiteren Ausgestaltungsform kann vorgesehen sein, dass ein Luftkanal über die gesamte Breite der Trittplatte vorgesehen ist und ein Druckluftstrom die gesamte Breite der Trittplattenoberseite erreicht. Einzelne Öffnungen können dabei in den Luftkanal so eingebracht werden, dass aus diesen ein Druckluftstrom in Richtung der Trittplattenoberseite bei Druckluftbeaufschlagung so austritt, dass die auftretenden Druckluftkegel sich beim Auftreffen auf die Trittplattenoberseite überschneiden, sodass Druckluftbeaufschlagung über die gesamte Breite der Trittplattenoberseite erreicht wird.

Weiterhin kann auch vorgesehen sein, dass nur eine längliche Öffnung über die gesamte Breite der Trittplattenbreite vorgesehen ist, sodass so der Druckluftstrom auf die gesamte Breite der Trittplattenoberseite auftrifft. Dazu können alle technisch sinnvollen Formen von Öffnungen in einem Luftkanal vorgesehen sein, es muss lediglich gewährleistet werden, dass eine ausreichende Druckluftbeaufschlagung der Trittplattenoberseite zur Verschiebung von Verschmutzungen über die gesamte Breite der Trittplattenoberfläche gewährleistet ist.

Weiterhin ist es auch denkbar und möglich, dass einzelne Luftkanäle mit jeweils einer einzelnen Öffnung vorgesehen sind, aus der Druckluft auf die Trittplattenoberseite ausströmt. Weiterhin kann auch vorgesehen sein, dass ein einzelner Luftkanal mit mehreren Öffnungen vorgesehen ist.

Bevorzugt ist, dass ein einzelner Luftkanal mehrere Öffnungen aufweist.

In einer weiteren Ausgestaltungsform kann der Luftkanal im Bereich der Öffnung als Düse ausgestaltet sein.

Erfindungsgemäß liegen die Öffnung des Luftkanals und der Bereich der Trittplattenoberseite, auf den die Druckluft auftrifft, in einem Bereich innerhalb des Fahrzeugs, beispielsweise hinter einer Tür. Diese Anordnung ist besonders vorteilhaft, da so die Öffnung des Luftkanals vor Verschmutzung durch äußere Einflüsse und vor äußerer Temperatur, beispielsweise Einfrieren, geschützt wird.

Der Luftkanal mit Öffnungen kann als gesondertes Bauteil ausgeführt sein, welches oberhalb der Trittplattenoberseite angebracht werden kann. Besonders bevorzugt in diesem Zusammenhang ist, dass dieser als längliches Bauteil mit einem Hohlraum ausgeführt wird, wobei in das Bauteil Öffnungen eingebracht werden, durch die Druckluft nach außen strömen kann. Diese werden dann so ausgerichtet, dass der durch die Öffnungen austretende Druckluftstrom unmittelbar vor den Düsen auf die Trittplattenoberseite auftrifft, um diese zu reinigen.

Weiterhin kann auch vorgesehen sein, dass der Luftkanal mit den Öffnungen als integraler Bestandteil eines bereits vorhandenen Bauteils an der Fahrzeugseite vorgesehen ist. Wie bereits oben beschrieben kann ein Luftkanal und eine Öffnung beispielsweise in eine Trittplatte, in eine Trittschiene oder eine Blende eingebracht werden, die bereits am Fahrzeug angebracht sind. In einer weiteren Ausgestaltungsform kann auch vorgesehen sein, dass ein Luftkanal und Öffnungen in diesem Luftkanal in der Türunterseite vorgesehen sind.

Besonders bevorzugt ist, dass der Weg zwischen dem Ort an dem die Druckluft aus der Öffnung austritt und auf die Trittplattenoberseite auftritt besonders kurz ist, da sich bei längeren Wegen ein großer Druckabfall pro Strecke nachteilig auswirkt. Je weiter die Trittplattenoberseite vom Austrittspunkt der Druckluft aus der Öffnung entfernt ist, desto weniger Druck steht an der Trittplattenoberseite zur Verfügung, um diese von Verschmutzungen zu reinigen.

In einer weiteren Ausgestaltungsform kann auch vorgesehen sein, dass der Luftkanal im Bereich der Öffnung erwärmt wird, um ein Einfrieren zu. Weiter kann auch vorgesehen sein, dass die Druckluft erwärmt wird. Durch einen erwärmten Luftstrom kann auch ein Trocknen der Trittplatte verbessert werden. Dabei kann vorgesehen sein, dass die Druckluft mit einer Wärmequelle im Fahrzeug gekoppelt ist, beispielsweise ein bereits vorhandenes Heizsystem.

Weiterhin kann vorgesehen sein, dass ein Heizsystem in eine Trittleiste, eine Blende oder die Reinigungsvorrichtung integriert ist. Dabei ist es möglich, dass eine einzelne Heizung vorgesehen ist, die sowohl die Druckluft als auch den Luftkanal erwärmt. Weiter kann jedoch auch vorgesehen sein, dass eine erste Heizung zur Erwärmung der Druckluft und/oder eine zweite Heizung zur Erwärmung des Luftkanals vorgesehen sind.

Der Druck mit der die Druckluft aus den Öffnungen des Luftkanals strömt, kann durch einen Druckregler geregelt werden. Druckluftsysteme, die an Fahrzeugen zur Personenbeförderung vorhanden sind stellen in der Regel Druckluft bis 4 bar bereit. Diese kann genutzt werden, um auch die Druckluft für die Reinigungsvorrichtung zu nutzen. Dabei kann der Luftkanal mit einem Pneumatikanschluss an das Druckluftsystem eines Fahrzeugs angeschlossen werden. Des Weiteren ist es auch möglich, dass mit einem Druckregler der Druck der durch die Öffnungen im Luftkanal austritt geregelt wird. Besonders bevorzugt ist dabei, dass der Druckregler mit der Steuerung für das Einfahren und Ausfahren eines Schiebetritts verbunden ist, sodass die Druckluftbeaufschlagung während eines Einfahrens des Schiebetritts erfolgt, sodass die Trittplattenoberfläche nur beim Einfahren so mit Druckluft beaufschlagt wird, dass ein Druckluftstrom auf die Trittplattenoberfläche gerichtet wird, der durch das Einfahren der Trittplatte über die gesamte Oberfläche der Trittplatte geführt wird. Dadurch trifft der Luftstrom zwar nur einen Bereich über die gesamte Breite der Trittplattenoberfläche, durch die Relativbewegung zwischen Trittplatte und Luftstrom während des Einfahrens wird so jedoch die gesamte Trittplattenoberfläche gereinigt. Diese Bewegung ähnelt dabei einer Kehrbewegung der Trittplattenoberfläche mittels Druckluft.

Weiterhin ist es auch möglich, die Reinigungsvorrichtung zu nutzen, um das Fahrzeugtrittsystem vor dem Eindringen von Wasser und Schmutz zu schützen, beispielsweise witterungsbedingt oder in einer Waschstraße für Schienenfahrzeuge. Dabei wird dann der Druckluftstrom als Barriere zum Schutz des Fahrzeuginneren genutzt, um so ein Eindringen von Wasser und Schmutz zu vermeiden oder zumindest zu verringern.

Zusätzlich oder getrennt zu obigem Fahrzeugtrittsystem wird ein Verfahren zur Reinigung einer Trittplatte eines Fahrzeugtrittsystems vorgeschlagen. Dabei ist vorgesehen, dass das Fahrzeugtrittsystem eine Trittplatte mit einer Trittplattenoberseite und eine Reinigungsvorrichtung gemäß der obigen Beschreibung aufweist. Die Reinigungsvorrichtung weist einen Luftkanal mit mindestens einer Öffnung auf, die in Richtung der Trittplattenoberseite weist.

Der Luftkanal wird dabei mit Druckluft beaufschlagt und ein Druckluftstrom strömt durch die Öffnung aus, sodass dieser Druckluftstrom in einem Bereich unmittelbar vor der Öffnung auf die Trittplattenoberfläche auftritt und eine sich auf der Trittplattenoberseite in diesem Bereich befindende Verschmutzung durch den auftreffenden Druckluftstrom verschoben wird. Das Verschieben erfolgt dadurch, dass durch den Druckluftstrom eine Krafteinwirkung auf die Verschmutzung wirkt.

Besonders bevorzugt ist dabei, dass die Trittplatte einfahrbar und ausfahrbar ist, und dass Druckluft auf die Trittplattenoberfläche während des Einfahrvorgangs trifft. Auf diese Weise bewegen sich Trittplattenoberseite und Druckluftstrom relativ zueinander, sodass der Bereich in dem die Druckluft auf die Trittplattenoberseite trifft über die gesamte Fläche der Trittplattenoberseite geführt wird. Dadurch wird die gesamte Trittplattenoberseite gereinigt.

Besonders bevorzugt ist es auch, dass Druckluft durch die Öffnungen dann ausströmt, wenn die Trittplatte eingefahren wird.

In einer weiteren Ausgestaltungsform kann der Druckluftstrom und/oder die Öffnung erwärmt werden.

Weitere bevorzuge Ausgestaltungsformen und Weiterbildungen sind in den nachfolgenden Figuren angegeben. Die daraus hervorgehenden jeweiligen Merkmale sind jedoch nicht auf einzelne Figuren und Ausgestaltungen beschränkt. Vielmehr können ein oder mehrere Merkmale derjenigen Beschreibung mit einzelnen oder mehreren Merkmalen der Figuren zusätzlich zu Weiterbildungen kombiniert werden.

Es zeigen
- Fig.1: einen Vertikalschnitt eines Schiebetritts,
- Fig. 2 und Fig. 3: weitere Vergrößerungen des Vertikalschnitts,
- Fig. 4: einen weiteren Schiebetritt und
- Fig. 5: eine Fotographie eines Bauteils als Luftkanal mit Öffnungen.

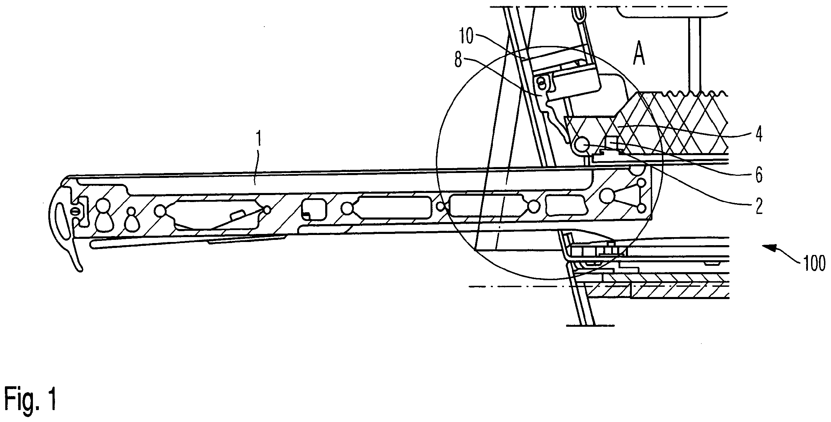

Aus Figur 1 geht ein vertikaler Schnitt eines Schiebetrittes 100 an einem Fahrzeug hervor. Dieser Schiebetritt umfasst eine Trittplatte 1, die in dieser Darstellung ausgefahren ist. Ein Luftkanal 2 ist dabei in eine Trittschiene 4 integriert. An die Trittschiene 4 schließt sich eine Türdichtung 8 an, welche den Türflügel 10 mit der Trittschiene 4 gegenüber dem äußeren Bereich abdichtet. Am Türflügel entlang streckt sich die Außenkante des Fahrzeugs, sodass der Luftkanal 2 innerhalb des Fahrzeugs liegt.

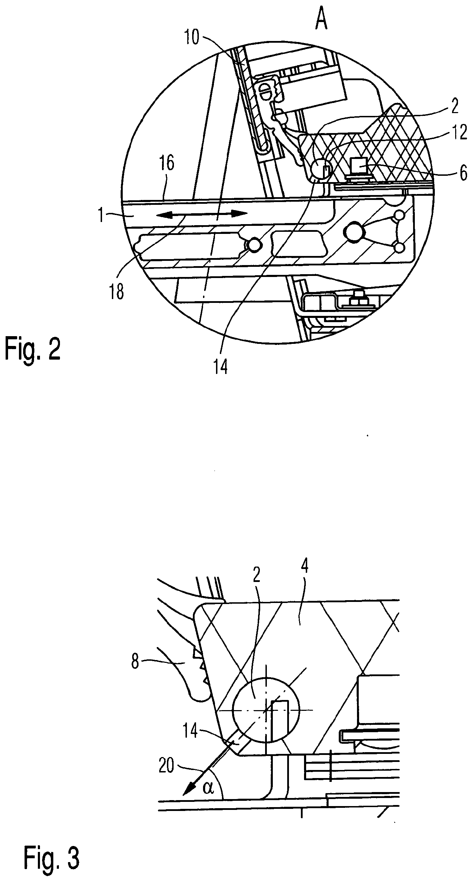

Eine weitere Detaildarstellung A. des Vertikalschnitts des Schiebetritts 100 im Bereich der Abdichtung und des Luftkanals geht aus der Figur 2 hervor, wo der Luftkanal 2 eine Öffnung 14 aufweist, welche in Richtung der Trittplattenoberseite 16 gerichtet ist. Der Luftkanal 2 weist zudem einen pneumatischen Anschluss 12 auf, womit der Druckluftkanal 2 mit einem am Fahrzeug bereitgestellten Druckluftsystem verbunden werden kann. Der Luftkanal 2 und die Öffnung 14 des Luftkanals 2 sind innerhalb des Fahrzeugs angeordnet. Die Trittplatte 1 kann aus- und eingefahren werden, was hier mit einem Pfeil mit dem Bezugszeichen 18 dargestellt wird.

Desweiteren ist der Luftkanal 2 nahe der Trittschienenheizung 6 angeordnet, sodass ein Einfrieren der Öffnung und/oder des Luftkanals durch Nutzung dieser Heizung 6 vermieden werden kann. Außerdem können dadurch Verschmutzungen in Form von Eis und Schnee aufgetaut werden.

Figur 3 stellt die gleiche Ansicht des Vertikalschnitts des Schiebetritts 100 in einer weiteren Vergrößerung dar. Hier ist mit einem Pfeil 20 schematisch dargestellt, wie ein Druckluftstrom durch die Öffnung 14 des Luftkanals 2 in Richtung der Trittplattenoberseite 16 strömt. Die Öffnung ist dabei in einem Winkel α zur Trittplattenoberseite hin ausgerichtet. Dieser Winkel muss im Bereich von 1° bis 90° liegen. Besonders bevorzugt ist jedoch das der Druckluftstrom 20 in einem Winkel zwischen 15° und 30° auf die Trittplattenoberseite geleitet wird. Weiterhin ist besonders bevorzugt, dass Druckluft unmittelbar vor der Öffnung auf die Trittplattenoberseite 16 auftrifft, damit ein Druckverlust des aus der Öffnung austretenden Druckluftstroms weitgehend vermieden wird, und die aus der Öffnung austretende Druckluft mit möglichst viel Kraft zur Reinigung der Trittplattenoberseite genutzt werden kann. Je weiter der Ort des Auftreffens der Druckluft auf die Trittplattenoberseite von der Düsenöffnung entfernt ist, desto weniger Druck steht im Druckluftstrom zur Verfügung.

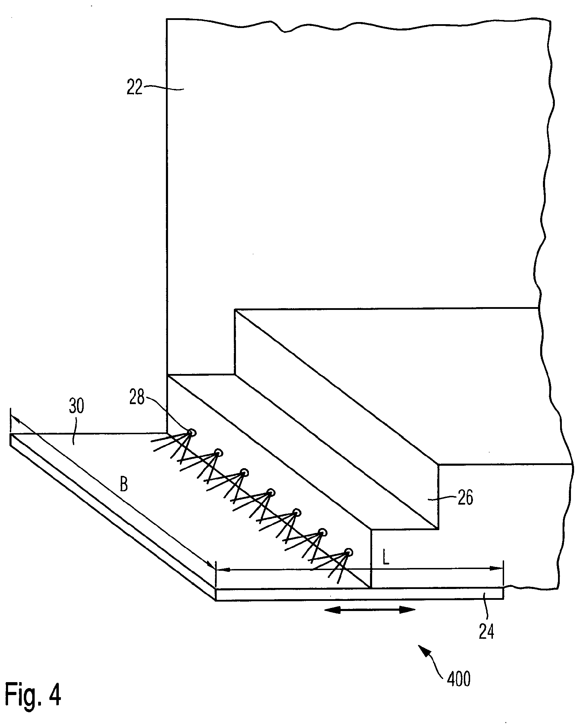

Aus Figur 4 geht eine Schiebtrittvorrichtung 400 hervor, deren Trittplatte 24 ein- und ausgefahren werden kann, was hier schematisch mit einem Doppelpfeil gekennzeichnet ist. An einer Trittstufe 26 welche in ein Fahrzeug 22 führt sind Öffnungen 28 angeordnet, aus denen Druckluft auf die Trittplattenoberseite 30 trifft. Beim Austritt der Druckluft aus den Öffnungen 28 in Richtung der Trittplattenoberseite 30 bildet diese Kegel, welche sich überschneiden, was hier schematisch dargestellt ist.

Die Öffnungen, aus denen Druckluft auftrifft, sind nebeneinander angeordnet, sodass die austrendende Druckluft Kegel bildet welche sich überschneiden und so die gesamte Breite B der Trittplatte mit Druckluft beaufschlagt wird. Weiterhin ist es jedoch auch denkbar, dass die Öffnungen länglich ausgestaltet sind, oder aber auch eine längliche Öffnung vorgesehen ist, sodass die Druckluft auf die gesamte Breite B der Trittplattenoberseite 30 aufgeleitet wird. Um eine Reinigung der Trittplattenoberseite auch der Länge L nach zu gewährleisten, wird der Druckluftstrom im Betrieb beim Einfahren der Trittplatte 24 auf die Trittplattenoberseite aufgeleitet, sodass die Trittplattenoberseite durch die Relativbewegung zwischen auftreffendem Druckluftstrom und Trittplattenoberseite auch der Länge L nach gereinigt wird, weil durch das Einfahren der Trittplatte 24 der Druckluftstrom der Länge nach über die Trittplattenoberseite 30 geführt wird.

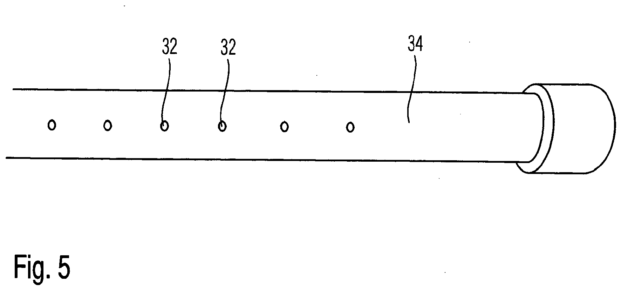

Aus der Figur 5 geht ein Luftkanal 34 hervor, der als separates Bauteil rohrförmig ausgestaltet ist. Der Luftkanal 34 weist einen Druckluftanschluss auf (nicht dargestellt) und Öffnungen 32, aus denen Druckluft herausströmt, wenn der Luftkanal mit Druckluft beaufschlagt wird. Der Luftkanal kann flexibel als Reinigungsvorrichtung an ein Fahrzeugtrittsystem montiert werden.

### Bezugszeichenliste

- 1, 24: Trittplatte
- 2, 34: Luftkanal
- 4: Trittschiene
- 6: Trittschienenheizung
- 8: Türdichtung
- 10: Türflügel
- 12: Pneumatischer Anschluss
- 14, 32: Öffnung
- 16, 30: Trittplattenoberseite
- 18: Pfeil Bewegung
- 20: Druckluftstrom
- 22: Fahrzeug
- 26: Trittstufe
- 28: Öffnung
- 100, 400: Schiebetritt

## Patentansprüche

1. Fahrzeugtrittsystem (100, 400) aufweisend eine Trittplatte (1, 24) mit einer begehbaren Trittplattenoberseite und eine Reinigungsvorrichtung zum Reinigen der Trittplattenoberseite (16, 30), wobei die Reinigungsvorrichtung wenigstens einen Luftkanal (2, 34) mit wenigstens einer Öffnung (14, 32) aufweist und der Luftkanal (2, 34) mit Druckluft beaufschlagbar ist, sodass ein Druckluftstrom (20) aus der Öffnung (14, 32) strömen kann, und wobei die Öffnung (14, 32) derart in Richtung der Trittplattenoberseite (16, 30) gerichtet ist, dass der Druckluftstrom (20) auf die Trittplattenoberseite (16, 30) auftrifft, **dadurch gekennzeichnet, dass**
- die Öffnung (14, 32) innerhalb des Fahrzeugs (22) anordenbar ist, und
- die Öffnung (14, 32) und die Trittplatte (1, 24) relativ zueinander bewegt werden können.

2. Fahrzeugtrittsystem (100, 400) nach Anspruch 1, wobei die Öffnung (14, 32) des Luftkanals (2, 34) an einem Türportal angeordnet ist.

3. Fahrzeugtrittsystem (100, 400) nach Anspruch 1 oder Anspruch 2, **dadurch gekennzeichnet, dass** die Öffnung (14, 32) als integraler Bestandteil in eine Trittschiene ober eine Türunterkante ausgestaltet ist.

4. Fahrzeugtrittsystem (100, 400) nach einem der vorherigen Ansprüche, aufweisend eine erste Heizung zur Erwärmung der Druckluft.

5. Fahrzeugtrittsystem (100, 400) nach einem der vorherigen Ansprüche, aufweisend eine zweite Heizung (6) zur Erwärmung des Luftkanals.

6. Fahrzeugtrittsystem (100, 400) nach einem der vorherigen Ansprüche, aufweisend einen Druckregler zur Regelung des Druckluftstroms (20), der aus der Öffnung (14, 32) austritt.

7. Fahrzeugtrittsystem (100, 400) nach einem der vorherigen Ansprüche, **dadurch gekennzeichnet, dass** der Luftkanal (2, 34) im Bereich der Öffnung als Düse ausgestaltet ist.

8. Fahrzeugtrittsystem (100, 400) nach einem der vorherigen Ansprüche, wobei die Öffnung (14, 32) derart ausgeführt und angeordnet ist, dass die gesamte Breite der Trittplatte (1, 24) mit Druckluft beaufschlagt wird.

9. Fahrzeugtrittsystem (100, 400) nach einem der vorherigen Ansprüche, aufweisend mehrere Düsen.

10. Fahrzeugtrittsystem (100, 400) nach Anspruch 9, wobei die Öffnungen (14, 32) mit einem einzigen Luftkanal (2, 34) in Verbindung stehen.

11. Verfahren zur Reinigung einer Trittplatte (1, 24) eines Fahrzeugtrittsystems (100, 400), wobei das Fahrzeugtrittsystem (100, 400) eine Trittplatte (1, 24) mit einer begehbaren Trittplattenoberseite (16, 30) und eine Reinigungsvorrichtung mit wenigstens einem Luftkanal (2, 34) mit wenigstens einer in Richtung der Trittplattenoberseite (16, 30) weisenden Öffnung (14, 32) aufweist, wobei ein Druckluftstrom aus der Öffnung (14, 32) strömt, wenn der Luftkanal mit Druckluft beaufschlagt wird, und wobei die Trittplatte (1, 24) aus einer ausgefahrenen Position in eine eingefahrene Position einfahren kann, **dadurch gekennzeichnet, dass** die Trittplattenoberseite (16, 30) während des Einfahrvorgangs mit Druckluft beaufschlagt wird.

12. Verfahren nach Anspruch 11, **dadurch gekennzeichnet, dass** der Druckluftstrom (20) unmittelbar vor der Öffnung (14, 32) auf die Trittplattenoberseite (16, 30) auftrifft.

13. Verfahren nach Anspruch 11 oder 12, **dadurch gekennzeichnet, dass** der Druckluftstrom (20) erwärmt wird.

14. Verfahren nach einem der Ansprüche 11 bis 13, wobei der Druckluftstrom (20) über eine gesamte Breite der Trittplatte (1, 24) auf die Trittplattenoberseite (16, 30)auftrifft.

## Claims

1. A vehicle step system (100, 400) comprising a footplate (1, 24) with a footplate top side that can be stepped on and a cleaning device for cleaning the footplate top side (16, 30), wherein the cleaning device has at least one air duct (2, 34) with at least one opening (14, 32) and the air duct (2, 34) can be supplied with compressed air, so that a compressed-air flow (20) can flow from the opening (14, 32), and wherein the opening (14, 32) is directed in the direction of the footplate top side (16, 30) in such a way that the compressed-airflow (20) hits the footplate top side (16, 30), **characterized in that**
- the opening (14, 32) can be disposed within the vehicle (22), and
- the opening (14, 32) and the footplate (1, 24) can be moved relative to one another.

2. The vehicle step system (100, 400) according to claim 1, wherein the opening (14, 32) of the air duct (2, 34) is arranged on a door portal.

3. The vehicle step system (100, 400) according to claim 1 or claim 2, **characterized in that** the opening (14, 32) is configured as an integral component in a step rail or a lower door edge.

4. The vehicle step system (100, 400) according to any one of the preceding claims, comprising a first heating system for heating the compressed air.

5. The vehicle step system (100, 400) according to any one of the preceding claims, comprising a second heating system (6) for heating the air duct.

6. The vehicle step system (100, 400) according to any one of the preceding claims, comprising a pressure controller for controlling the compressed-air flow (20) exiting the opening (14, 32).

7. The vehicle step system (100, 400) according to any one of the preceding claims, **characterized in that** the air duct (2, 34) is configured as a nozzle in the region of the opening.

8. The vehicle step system (100, 400) according to any one of the preceding claims, wherein the opening (14, 32) is configured and arranged in such a way that compressed air is applied to the entire width of the footplate (1, 24).

9. The vehicle step system (100, 400) according to any one of the preceding claims, comprising several nozzles.

10. The vehicle step system (100, 400) according to claim 9, wherein the openings (14, 32) are connected to a single air duct (2, 34).

11. A method for cleaning a footplate (1, 24) of a vehicle step system (100, 400), wherein the vehicle step system (100, 400) comprises a footplate (1, 24) with a footplate top side (16, 30) that can be stepped on and a cleaning device including at least one air duct (2, 34) with at least one opening (14, 32) facing in the direction of the footplate top side (16, 30), wherein a compressed-air flow flows from the opening (14, 32) when compressed air is supplied to the air duct, and wherein the footplate (1, 24) can retract from an extended position into a retracted position, **characterized in that** compressed air is applied to the footplate top side (16, 30) during the retraction process.

12. The method according to claim 11, **characterized in that** the compressed-air flow (20) hits the footplate top side (16, 30) directly in front of the opening (14, 32).

13. The method according to claim 11 or 12, **characterized in that** the compressed-air flow (20) is heated.

14. The method according to any one of the claims 11 to 13, wherein the compressed-air flow (20) hits the footplate top side (16, 30) across an entire width of the footplate (1, 24).

## Revendications

1. Système de marchepied de véhicule (100, 400) comportant une plaque de marchepied (1, 24) pourvue d'une face supérieure de plaque de marchepied praticable et d'un dispositif de nettoyage, destiné à nettoyer la face supérieure de la plaque de marchepied (16, 30), le dispositif de nettoyage comportant au moins un canal d'air (2, 34) pourvu d'au moins un orifice (14, 32) et le canal d'air (2, 34) pouvant être soumis à de l'air comprimé, de telle sorte qu'un flux d'air comprimé (20) puisse s'écouler hors de l'orifice (14, 32), et l'orifice (14, 32) étant orienté dans la direction de la face supérieure de la plaque de marchepied (16, 30), de telle sorte que le flux d'air comprimé (20) soit incident sur la face supérieure de la plaque de marchepied (16, 30), **caractérisé en ce que**
- l'orifice (14, 32) peut se placer à l'intérieur du véhicule (22), et
- l'orifice (14, 32) et la plaque de marchepied (1, 24) sont susceptibles d'être déplacés l'un vers l'autre.

2. Système de marchepied de véhicule (100, 400) selon la revendication 1, l'orifice (14, 32) du canal d'air (2, 34) étant placé sur un portique de porte.

3. Système de marchepied de véhicule (100, 400) selon la revendication 1 ou la revendication 2, **caractérisé en ce que** l'orifice (14, 32) est conçu sous la forme d'une partie intégrante dans une cornière de marchepied ou dans une arête inférieure de porte.

4. Système de marchepied de véhicule (100, 400) selon l'une quelconque des revendications précédentes, comportant un premier système de chauffage, destiné à chauffer l'air comprimé.

5. Système de marchepied de véhicule (100, 400) selon l'une quelconque des revendications précédentes, comportant un deuxième système de chauffage (6), destiné à chauffer le canal d'air.

6. Système de marchepied de véhicule (100, 400) selon l'une quelconque des revendications précédentes, comportant un régulateur de pression, destiné à réguler le flux d'air comprimé (20), qui s'échappe de l'orifice (14, 32).

7. Système de marchepied de véhicule (100, 400) selon l'une quelconque des revendications précédentes, **caractérisé en ce que** le canal d'air (2, 34) est conçu sous la forme de buse dans la zone de l'orifice.

8. Système de marchepied de véhicule (100, 400) selon l'une quelconque des revendications précédentes, l'orifice (14, 32) étant réalisé et placé de telle sorte que toute la largeur de la plaque de marchepied (1, 24) soit soumise à de l'air comprimé.

9. Système de marchepied de véhicule (100, 400) selon l'une quelconque des revendications précédentes, comportant plusieurs buses.

10. Système de marchepied de véhicule (100, 400) selon la revendication 9, les orifices (14, 32) étant en liaison avec un unique canal d'air (2, 34).

11. Procédé destiné à nettoyer une plaque de marchepied (1, 24) d'un système de marchepied de véhicule (100, 400), le système de marchepied de véhicule (100, 400) comportant une plaque de marchepied (1, 24) pourvue d'une face supérieure de plaque de marchepied (16, 30) praticable et d'un dispositif de nettoyage pourvu d'au moins un canal d'air (2, 34), avec au moins un orifice (14, 32) montrant dans la direction de la face supérieure de la plaque de marchepied (16, 30), un flux d'air comprimé s'écoulant hors de l'orifice (14, 32) lorsqu'on soumet le canal d'air à de l'air comprimé, et la plaque de marchepied (1, 24) étant susceptible de s'escamoter d'une position déployée dans une position escamotée, **caractérisé en ce que** la face supérieure de la plaque de marchepied (16, 30) est soumise à de l'air comprimé pendant le processus d'escamotage.

12. Procédé selon la revendication 11, **caractérisé en ce que** le flux d'air comprimé (20) est directement incident à l'avant de l'orifice (14, 32) sur la face supérieure de la plaque de marchepied (16, 30).

13. Procédé selon la revendication 11 ou 12, **caractérisé en ce que** le flux d'air comprimé (20) est chauffé.

14. Procédé selon l'une quelconque des revendications 11 à 13, le flux d'air comprimé (20) étant incident sur une largeur totale de la plaque de marchepied (1, 24) sur la face supérieure de la plaque de marchepied (16, 30).
